# EUROPEAN PATENT APPLICATION

(11) **EP 4 202 787 A1**
(43) Date of publication of application: **28.06.2023**
(21) Application number: 21383197.7
(22) Date of filing: 22.12.2021
(51) Int. Cl.: G06N 3/12, G06N 20/00, G06N 5/00

(54) **A METHOD FOR DISTRIBUTED MACHINE LEARNING MODEL LIFECYCLE MANAGEMENT BASED ON GENETIC ALGORITHMS**

(71) Applicant: Zhilabs S.L., 08029 Barcelona (ES)
(72) Inventor: Arpirez Vega, Julio César, 08029 Barcelona (ES); Zapater Cano, Sergi, 08029 Barcelona (ES); Gallego Castellanos, Adrián, 08029 Barcelona (ES)
(74) Representative: Grünecker Patent- und Rechtsanwälte PartG mbB

(57) **Abstract**

A computer-implemented method of utilizing data partitioning for machine-learning on high volume data is provided. The method comprises applying, at each computing node, a respective model instance of a machine-learning model to a respective data partition of the high volume data, to generate first scores for the model instances. The method further comprises rotating the model instances with respect to the computing nodes, and applying, at each computing node, a model instance rotated to the computing node to the respective data partition, to generate second scores for the model instances. The method further comprises selecting high-scored model instances based on the first scores and the second scores and training new model instances based on the high-scored model instances.

## Description

### TECHNICAL FIELD

This disclosure relates to training of machine learning models on high volume data streams.

### BACKGROUND

In today's data-driven world, data for training machine learning models is available in high volumes. Training of a machine learning model usually requires that a single computing node processes all training data in a subsequent manner. However, single computing nodes often do not have sufficient capability in terms of memory, bandwidth and processing power to use all available data for training. Hence, a representative subset of the training data is usually selected for the training. However, employing a too small subset risks overfitting the machine learning model to specific patterns of the subset. A too small subset may lack patterns essential for the task addressed by the machine learning model. Further, selecting a subset by applying a sampling function is prone to introducing sampling artifacts, reducing accuracy of the trained model.

### SUMMARY

The present invention proposes applying data partitioning for training of machine learning models on high volume data streams. The proposed approach is based on a genetic algorithm employing a fitness function obtained from rotating model instances of the machine learning model over distributed computing nodes.

It is an object of present invention to provide a method and a system for overcoming memory bottlenecks in training of machine learning models.

This object is solved by the subject matter of the independent claims.

Embodiments of the present invention are defined by the dependent claims.

According to embodiments, a computer-implemented method of utilizing data partitioning for machine-leaming on high volume data is provided. The method comprises partitioning the high volume data into a plurality of data partitions, wherein each data partition is provided to a respective computing node of a plurality of computing nodes, and storing, at each computing node of the plurality of computing nodes, a model instance of a plurality of model instances of a machine-leaming model. The method further comprises applying the stored model instance at each computing node to the data partition of the computing node to generate first scores for the model instances. Further, the model instances are rotated with respect to the computing nodes. The method further comprises applying a model instance rotated to the computing node to the data partition of the computing node to generate second scores for the model instances, and selecting high-scored model instances based on the first scores and the second scores of the model instances. Finally, the method comprises training new model instances on the respective data partitions of the computing nodes, wherein the new model instances are based on the high-scored model instances. Training the new model instances may be based on traits of the high-scored model instances.

According to an aspect, the traits correspond to values of metavariables employed for training the high-scored model instances. Training the new model instances may be based on employing random permutations of the values of the metavariables employed for training the high-scored model instances.

According to an embodiment, training of some of the new model instances is further based on including a mutation to one of the values of the metavariables. In other embodiments, the high volume data is a data stream, and generating the first scores and generating the second scores is performed repeatedly during a model rotate period.

According to another aspect, rotating the model instances with respect to the computing nodes comprises replacing, at each computing node, the model instance currently applied with a model instance which has not yet been applied by the computing node during a current rotation round.

According to yet another aspect, the method further comprises, after generating the first scores or the second scores, uploading the first scores or the second scores, respectively, from the computing nodes to a database shared between the computing nodes.

According to an embodiment, the plurality of model instances is provided on a shared repository, wherein the method further comprises adding the new model instances to the plurality of model instances and removing an equal number of low-scored model instances to form a new plurality of model instances.

According to another embodiment, the method further comprises employing the new plurality of model instances to repeat generating first scores, generating second scores, selecting high-scored model instance, and training new model instances.

According to an aspect, selecting the high scored model instances is based on averages of the first scores and the second scores.

According to embodiments, one or more computer-readable storage media are provided having computer-executable instructions stored thereon, which, when executed by one or more processors perform the above methods.

According to other embodiments, a distributed computing system for utilizing data partitioning for machine-leaming on high volume data is provided. The system comprises a plurality of computing nodes for processing the high volume data, wherein each computing node is configured for processing a data partition into which the high volume data is partitioned. Each computing node is configured for applying a current model instance from a plurality of model instances of the machine-leaming model to the data partition to generate a score for the model instance.

The system further comprises a server node comprising a database, wherein the database stores scores for the plurality of model instances, wherein the scores comprise, for each model instance, at least a first score obtained by applying the model instance at a first computing node of the plurality of computing nodes and a second score obtained by applying the model instance at a second computing node of the plurality of computing nodes.

The computing nodes are further configured to rotate the model instances with respect to the computing nodes, and to select high-scored model instances based on the first scores and the second scores. One or more computing nodes of the plurality of computing nodes are further configured for training new model instances on the data partition of the respective computing node, wherein the new model instances are based on the on the high-scored model instances.

According to an embodiment, each new model instance is based on traits of the high-scored model instances. According to another embodiment, the server further comprises a repository storing the plurality of model instances and, for each computing node, a history of previously applied model instances.

### BRIEF DESCRIPTION OF THE DRAWINGS

Embodiments are described with respect to the drawings in which
**Figure 1** illustrates components of a computing cluster configured for scoring a machine learning model on high volume data;
**Figure 2** illustrates a method that utilizes data partitioning for scoring a machine learning model on high volume data;
**Figure 3** illustrates a method that utilizes data partitioning for training a machine learning model on high volume data;
**Figure 4** illustrates a workflow for scoring a model instance on high volume data; and
**Figure 5** illustrates a workflow for training a new model instance on high volume data.

### DETAILED DESCRIPTION

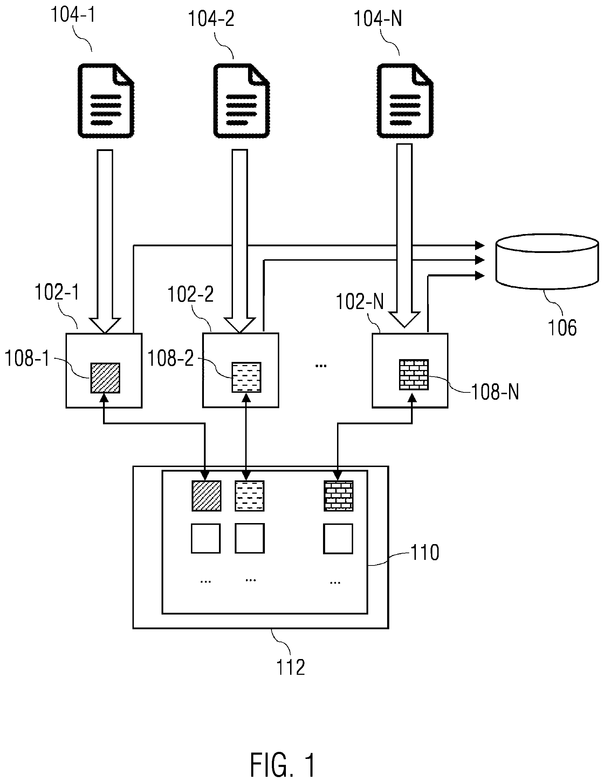

Figure 1 displays a computing environment in which partitioning of data is employed for scoring a machine learning model. The machine learning model is implemented in a plurality of model instances 108. The model instances 108 may have been obtained as the result of a previous training process, in which the machine learning model is tuned by adapting model parameters. When training the machine learning model in a distributed manner on separate data partitions, a plurality of model instances is obtained as the result of the training. The machine learning model may be a machine learning model for classification or a machine learning model for regression, for example. The machine learning model may be part of an analytic tool for predicting evolution of data and for anticipating possible problems reflected in the predicted evolution.

As shown in Figure 1, computing nodes 102 receive respective data partitions 104. In embodiments, data partitions 104 may correspond to fixed portions of a continuous data stream. The data stream is a potentially unbounded sequence of data items generated by an active, uncontrolled data source. The data stream may be continuously updated at a particular refresh rate. Application of machine learning models to data streams is particularly challenging because the data is high-volume, volatile, and the data content is potentially drifting over time.

Computing nodes 102 may download respective instances 108 of the machine learning model from a repository 110. The repository 110 may be stored on a computing node 112 accessible to all computing nodes 102. Each computing node 102-k is configured to apply the downloaded instances 108-k to the respective data partition 104-k.

The respective model instances 108 of the machine learning model may be distinguished from each other by being based on different values for metavariables. The metavariables may be variables of a training function used for obtaining the model instances. For example, the training function may have the signature training_algorithm(data, metavar1, metavar2, metavar3). The model instances 108 hence differ from each other by having been trained with different values of the metavariables set in the training function. For example, during a recent training episode, model instances 108-1 may have been trained with values metavar1=1, metavar2=2, and metavar3=3, on data partition 104-1 which comprises the first 128 MB of the data stream 104, while model instances 108-2 may have been trained with values metavar1=4, metavar2=5, and metavar3=6, on data partition 104-2 which comprises a subsequent 128 MB of data of the data stream 104.

The repository 110 maintains the model instance 108-k currently being applied at each respective computing node 102-k, as well as a history of model instances applied by each computing node. Repository 110 may be a version control repository. Repository 110 may store data corresponding to the parameters of the model instances acquired as the result of the training. Repository 110 may further store traits of the model instances, e.g. values of metavariables that had been employed for training the respective model instance.

Computing node 102-k, while applying respective model instance 108-k, generates a respective score for the model instance 108 and uploads the score to a score database 106. In embodiments, the score database 106 may be stored at the central computing node 112.

The shared repository 110 allows that every computing node can inspect models used on the other computing nodes, while the shared database 106 allows a global view of performance of the model instances.

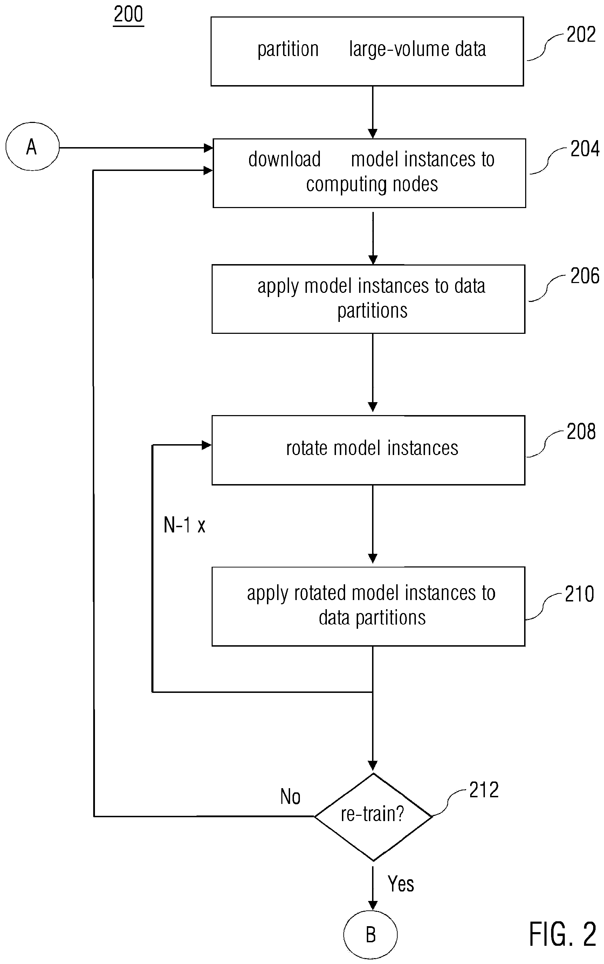

Computing nodes 102 cooperate in scoring the model instances 108, as described in detail below with reference to Figure 2. Computing nodes 102 are configured to rotate the model instances, so that, for example, during a first rotation period computing node 102-1 applies model instance 108-1, during the following rotation period applies model instance 108-2, followed by model instance 108-3 during a further rotation period, until computing node 102-1 has applied each model instance 108.

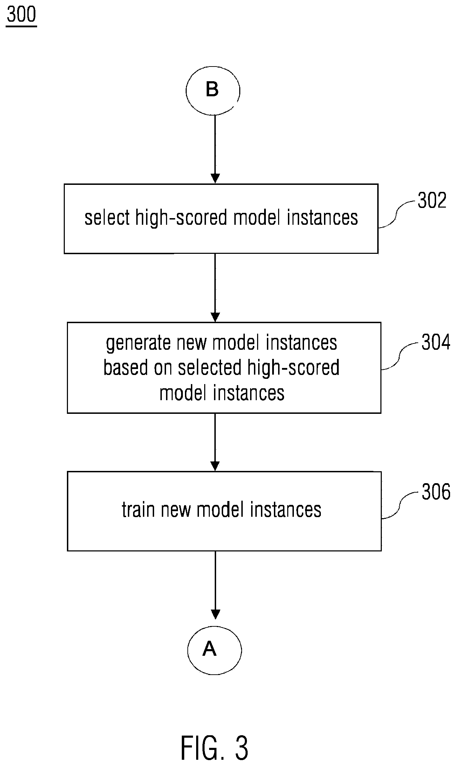

A subset of the computing nodes 102 may be configured for selecting high-scored model instances and for training new model instances based on traits of the selected high-scored model instances, as further described below with reference to Figure 3.

Figure 2 reproduces a flowchart of a method for scoring a machine learning model on partitioned data. Method 200 comprises step 202 of partitioning a large volume data set into plural data partitions. According to embodiments, the number of data partitions corresponds to the number N of computing nodes 102. The size of each data partition 104 may be adjusted to a size of computing resources available at a computing nodes 102 e.g. matching a maximal amount of memory of the computing node 102 that can be dedicated to holding the data partition without needing to swap parts of the data partition to a hard drive of the computing node 102. The data partition may correspond to a predetermined section of the continuous data stream which the computing node may pull from a server node.

Method 200 further comprises downloading 204 model instances of a machine learning model to the computing nodes. Step 204 may comprise downloading data defining a respective model instance to memory of the computing node 102.

In step 206, the model instances are applied to the data partitions, which may involve that each computing node applies a downloaded model instance to its data partition. Applying the model instance may, for example, include classifying data in the data partitions or performing a regression analysis on the data in the data partition. The prediction result produced from each of the model instances may be combined to yield a global prediction of the machine-learning model.

The results of the application of the model instance may be compared to reference data to infer a quality measure for the precision of the model instance on the data which may be captured in a score. Each score hence does not only depend on the particular model instance, but also on the particular data partition.

The score may be calculated by employing a scoring function. In embodiments, the machine learning model is a classification model and the scoring function may be based on a confusion matrix for summarizing the performance of the classification. In other embodiments, the scoring function may correspond to precision, accuracy, or recall of the classification model. When the machine learning model relates to regression, the score function may be based on R² or maximum error.

Each computing node may upload the score to a database 106. The data partitions may arrive with a particular refresh rate so that the scores may be obtained and uploaded to the repository at the refresh rate.

Method 200 comprises step 208 of rotating the model instances with respect to the computing nodes. Step 208 may be initiated upon expiry of a rotate period, which may depend on the size of the data and the amount of nodes. At step 208, each computing node may obtain another model instance that has not yet been applied on the particular computing node in a current rotation round. In embodiments, the plurality of model instances has a defined ordering and each computing node retrieves a model instance consecutive to a previously applied model instance from a repository to local memory.

In step 210 each computing node applies the model instance now in its memory to the data partition. Hence, for each model instance another score is yielded, which supplements the previous score from step 206 because the data partition on which the model instance is applied in step 210 is different from the data partition employed in step 206.

Steps 208 and 210 are repeated a predetermined number of times until each model instance has been applied at all computing node. Hence, steps 208 and 210 may be repeated N-1 times, so that the distribution of the model instances over the computing nodes returns to the distribution in step 206. Scoring according to the method 200 thereby achieves measuring performance of each model instance on all partitions of the data.

In step 212 it is determined whether retraining of the machine learning model is to be initiated. The decision for retraining the machine learning model may be based on expiry of a model retrain period. The time value chosen for the retrain period may depend on the size of the data and the number of computing nodes. When retraining is not initiated, another rotation round is started, corresponding to another iteration of steps 204-210.

Figure 3 relates to method 300 for retraining the machine learning model after performing the model rotation of Figure 2.Additionally, method 300 may be performed to obtain an initial set of model instances.

The approach of Figure 3 is based on a genetic algorithm which employs the scores obtained in the method of Figure 2 as fitness scores. The approach allows discarding models which are doing overfitting to the data in just one node and can help to reproduce the traits of the model which are relevant for the whole vision of the data, thus producing more accurate results. Alternating between the methods of Figures 2 and 3 allows generating successive generations of models with increasing accuracy.

The described approach overcomes the problem that some of the data partitions include empty data that cannot be employed to infer the classification or regression with which the machine learning model is tasked. Scores calculated at a single computing node hence cannot be trusted as reflecting the true accuracy of a model instance.

The described approach also avoids training the machine learning model on data partitions that include mostly empty data. Because such empty data partitions do not allow the model instances to learn relevant features of the data, model instances trained on these data partitions achieve low accuracy on other data partitions and hence are not likely to be selected for generating the new model instances.

In method 300, new model instances are generated based on traits of high-scored model instances. As the result of method 200, database 106 contains scores for all tuples of model instance and computing nodes. Averaging for each model instance the respective scores obtained at the different computing nodes yields a total score for the model instance. Hence, e.g. for model instance 108-1, the total score is formed as average of the N scores generated by applying model instance 108-1 at each of the computing nodes 102. Method 300 comprises step 302 of selecting high-scored model instances from the current plurality of model instances. Step 302 may comprise downloading the list of scores from the database 106 to a computing node 102. Each computing node 102 may act independent from the other computing nodes. Selecting the high-scored model instances may comprise ranking the model instances according to the average score and selecting a predetermined number of best score model instances. The computing node may then download the high-scored model instances from the repository 110.

Method 300 may further comprises step 304 of generating new model instances based on the selected high-scored model instances. According to embodiments, training parameters set for the new model instances may be based on training parameters of the selected high-scored model instances. The training parameters may include metavariables of a training function. According to embodiments, the number of new models generated corresponds to a number *offspring count,* which may be a user-defined variable. Generating the new model instances may also be based on parameters of the selected high-scored model instances as acquired in previous rounds of training.

In an illustrative example, the high-scored model instances are selected as two model instances and the first high-scored model has been trained with metavariables metavar1 = 1, metavar2 = 2, metavar3 = 3, while the second high-scored model has been trained with metavar1 = 4, metavar2 = 5, metavar3 = 6. The training parameters of the new model instances may correspond to random permutations of the metavariables of the high-scored models, e.g. a first new model instance may be trained with metavar1 = 1, metavar2 = 2, metavar3 = 6, and further new models may be trained with metavar1 = 1, metavar2 = 5, metavar3 = 6, or metavar1 = 4, metavar2 = 5, metavar3 = 6, or metavar1 = 4, metavar2 = 2, metavar3 = 3.

In embodiments, generating the new model instances 304 also comprises introducing a random mutation. For example, only one metavariable of one of the new model instances may be mutated e.g. choosing metavar1 = 1, metavar2 = 2, metavar3 = 17.

Method 300 further comprises step 306 of training the generated new model instances, corresponding to a retraining of the machine learning model. Training 306 may not involve all computing nodes 102, but is performed at a subset of the computing nodes 102 having *offspring count* computing nodes. Each computing node of the selected subset trains one of the new model instances on the respective data partition. Hence, only a subset of the computing nodes need to be burdened with training while still all data partitions are employed to improve performance of the machine learning model.

In an embodiment, the subset of the computing nodes for retraining is selected based on considering the scores obtained at the computing nodes. Considering the scores may comprise excluding computing nodes on which model instances have achieved low scores from the subset, because the low scores indicate that the data partition of the respective computing node that is empty or is not related to the task addressed by the machine learning model.

Additionally, when method 300 is performed to generate the initial set of model instances referred to in Figure 1, method 300 may be performed on all N computing nodes 102.

After performing method 300, the computing nodes may return to method 200 and apply the new model instances along with the previous model instances on the data partitions. To keep the number of model instances constant, the same number *offspring count* of low-scored model instances selected from the previous model instances may be removed from the pool of model instances. After performing a number of rotations of the model instances over the computing nodes, another round of training of new models may be performed.

Method 300 hence allows keeping the best traits of the previous generation of the model instances to generate new model instances. The disclosed approach allows that the machine learning model is trained on a global vision of the data, without requiring joining of the data partitions. The processing according to Figure 2 and the training according to Figure 3 can be performed at each computing node independently without synchronization or locks. The proposed approach is therefore optimally parallelizable.

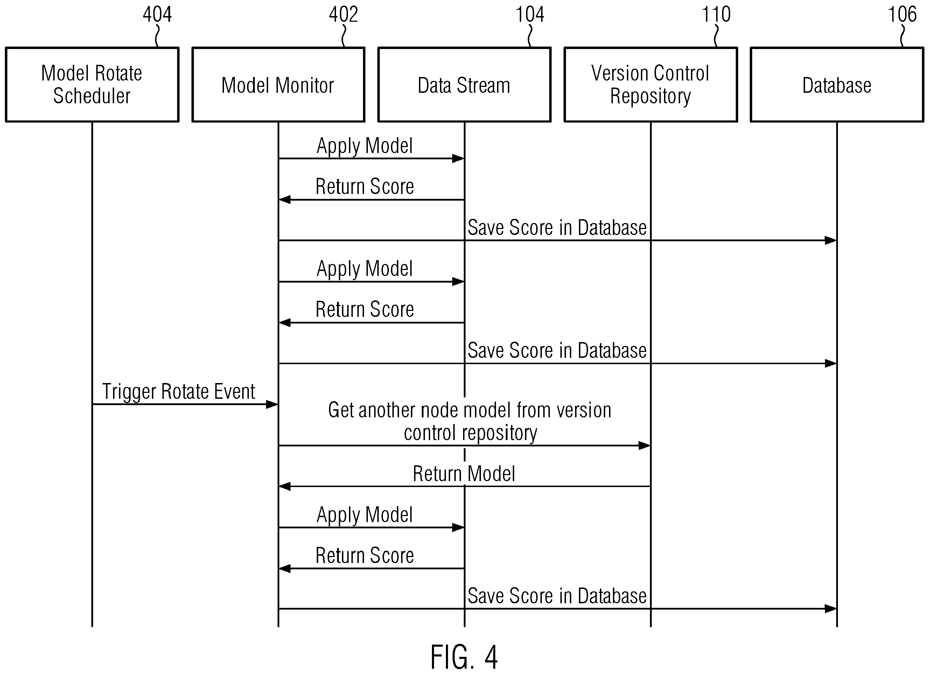

Figure 4 illustrates a workflow of components according to an implementation of method 200. The steps of method 200 are performed by a model monitor 402 interacting with data stream 104, the version control repository 110 and the database 106. The model monitor 402 is configured to continuously apply the model instance to a partition of the data stream 104 and deliver the scores to the database 106. A model rotate scheduler 404 is tasked with triggering a rotate event to the model monitor 402. The rotate event may be triggered by the model rotate scheduler upon expiry of a model rotate period.

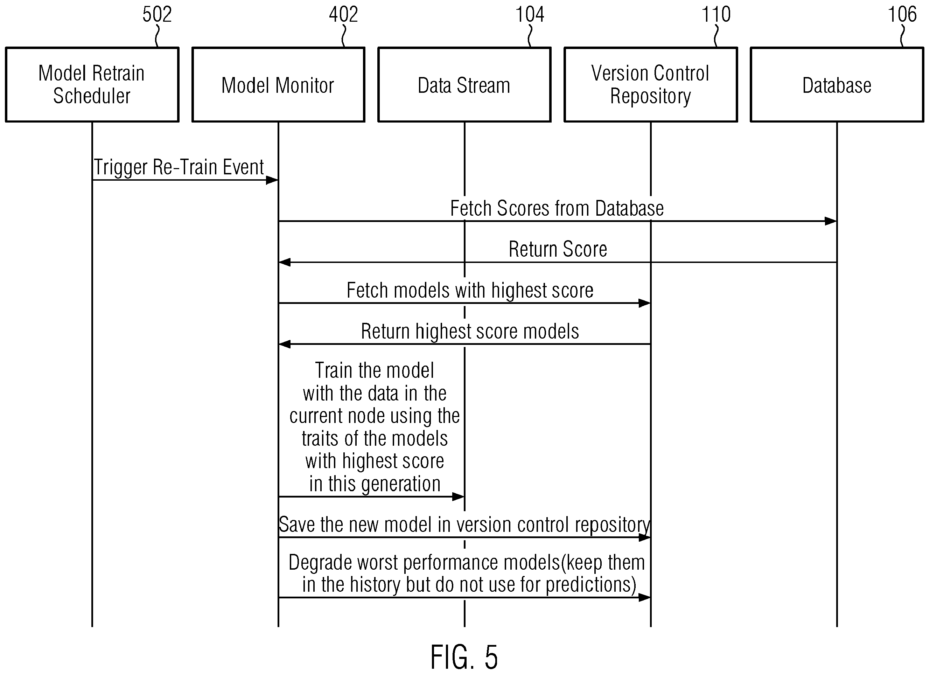

Figure 5 illustrates a workflow of components according to an implementation of method 300. The process of retraining is triggered by a model retrain scheduler 502 which triggers a retrain event upon expiry of a retrain period. Retrain scheduler 502 may be executed on a computing node selected for retraining according to method 300.

In embodiments, the model rotate scheduler 404 and the model retrain scheduler 502 are local agents of each of the computing nodes. The disclosed approach does not involve any locks or synchronization points between the computing nodes 102, so that communication bottlenecks are avoided.

Some or all of the method steps described above may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

## Claims

1. A computer-implemented method of utilizing data partitioning for machine-learning on high volume data, the method comprising:
partitioning (202) the high volume data into a plurality of data partitions, wherein each data partition is provided to a respective computing node of a plurality of computing nodes;
storing (204), at each computing node of the plurality of computing nodes, a model instance of a plurality of model instances of a machine-learning model;
applying (206), at each computing node of the plurality of computing nodes, the stored model instance to the data partition of the computing node, to generate first scores for the model instances;
rotating (208) the model instances with respect to the computing nodes;
applying (210), at each computing node of the plurality of computing nodes, a model instance rotated to the computing node to the data partition of the computing node, to generate second scores for the model instances;
selecting (302) high-scored model instances based on the first scores and the second scores of the model instances; and
training (306), at one or more computing nodes of the plurality of computing nodes, new model instances on the respective data partitions of the computing nodes, wherein the new model instances are based on the high-scored model instances.

2. The method of claim 1, wherein training the new model instances is based on traits of the high-scored model instances.

3. The method of claim 2, wherein the traits correspond to values of metavariables employed for training the high-scored model instances.

4. The method of claim 3, wherein training the new model instances is based on employing random permutations of the values of the metavariables employed for training the high-scored model instances.

5. The method of claim 4, wherein for a subset of the new model instances, training the new model instances is further based on including a mutation to one of the values of the metavariables.

6. The method of one of claims 1 to 5, wherein the high volume data is a data stream, wherein generating the first scores and generating the second scores is performed repeatedly during a model rotate period.

7. The method of one of claims 1 to 6, wherein rotating the model instances with respect to the computing nodes comprises replacing, at each computing node, the model instance currently applied with a model instance which has not yet been applied by the computing node during a current rotation round.

8. The method of one of claims 1 to 7, further comprising, after generating the first scores or the second scores, uploading the first scores or the second scores, respectively, from the computing nodes to a database shared between the computing nodes.

9. The method of one of claims 1 to 8, wherein the plurality of model instances is provided on a shared repository, wherein the method further comprises adding the new model instances to the plurality of model instances and removing an equal number of low-scored model instances to form a new plurality of model instances.

10. The method of claim 9, further comprising employing the new plurality of model instances to repeat generating first scores, generating second scores, selecting high-scored model instances, and training new model instances.

11. The method of claim 1 to 10, wherein selecting the high-scored model instances is based on averages of the first scores and the second scores.

12. One or more computer-readable storage media having computer-executable instructions stored thereon, which, when executed by one or more processors perform the method of one of claims 1 to 11.

13. A distributed computing system for utilizing data partitioning for machine-learning on high volume data, the system comprising:
a plurality of computing nodes for processing the high volume data, wherein each computing node is configured for processing a data partition into which the high volume data is partitioned, wherein each computing node is configured for applying a current model instance from a plurality of model instances of the machine-learning model to the data partition to generate a score for the model instance; and
a server node comprising a database, wherein the database stores scores for the plurality of model instances, wherein the scores comprise, for each model instance, at least a first score obtained by applying the model instance at a first computing node of the plurality of computing nodes and a second score obtained by applying the model instance at a second computing node of the plurality of computing nodes,
wherein the computing nodes are further configured to rotate the model instances with respect to the computing nodes, and to select high-scored model instances based on the first scores and the second scores,
wherein one or more computing nodes of the plurality of computing nodes are further configured for training new model instances on the data partition of the respective computing node, wherein the new model instances are based on the on the high-scored model instances.

14. The system of claim 13, wherein each new model instance is based on traits of the high-scored model instances.

15. The system of claim 14, wherein the server further comprises a repository storing the plurality of model instances and, for each computing node, a history of previously applied model instances.
